(19) Europäisches Patentamt
European Patent Office
Office européen des brevets

(11) **EP 2 378 072 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(51) Int Cl.:
*F01D 5/14* (2006.01)   *F02K 3/02* (2006.01)
*F02K 3/06* (2006.01)   *F01D 9/02* (2006.01)
*F01D 9/04* (2006.01)   *F01D 9/06* (2006.01)

(21) Anmeldenummer: **11002472.6**

(22) Anmeldetag: **24.03.2011**

(54) **Nebenstromkanal eines Turbofantriebwerkes**

Bypass flow channel of a turbofan engine

Canal en dérivation d'un turboréacteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2010 DE 102010014900**

(43) Veröffentlichungstag der Anmeldung:
**19.10.2011 Patentblatt 2011/42**

(73) Patentinhaber: **Rolls-Royce Deutschland Ltd & Co KG**
**15827 Blankenfelde-Mahlow (DE)**

(72) Erfinder: **Clemen, Carsten, Dr.**
**15827 Blankenfelde- Mahlow (DE)**

(74) Vertreter: **Hoefer & Partner Patentanwälte mbB**
**Pilgersheimer Straße 20**
**81543 München (DE)**

(56) Entgegenhaltungen:
**EP-A2- 0 942 150     WO-A1-2005/119028**
**GB-A- 2 226 600     US-A1- 2017 362 946**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Nebenstromkanal eines Turbofantriebwerk mit in diesem angeordneten Nachleitradschaufeln eines Nachleitschaufelrades zum Entdrallen des vom Fan erzeugten Luftstroms und stromab von diesem angeordneten Verkleidungselementen für im Nebenstromkanal vorgesehene Einbauten wie Leitungen, Halterungen, Stützen oder Antriebsübertragungsmittel.

Turbofantriebwerke weisen am Lufteintritt einen Bläser (oder Fan) auf, hinter dem der von diesem erzeugte Luftstrom in einen Kernluftstrom und einen Nebenluftstrom aufgeteilt wird. Der Kernluftstrom strömt in einem Kernstromkanal, der von einem den Nebenluftstrom führenden Nebenstromkanal umgeben ist. Stromab des Fans ist im Nebenstromkanal ein Nachleitschaufelrad zum Entdrallen des vom Fan erzeugten Luftstroms angeordnet. Die von der Triebwerksverkleidung gebildete Außenwand des Nebenstromkanals ist zudem durch sich radial erstreckende Stützelemente an der Seitenwand des Kernstromkanals, die gleichzeitig die Innenwand des Nebenstromkanals bildet, abgestützt. Darüber hinaus befinden sich im Nebenstromkanal unterschiedliche, in radialer Richtung verlaufende Einbauten wie Versorgungsleitungen für die Flugzeugzelle und für das Triebwerk, eine Radialwelle, Halterungen zur Befestigung des Triebwerks am Flugzeugrumpf öder den Tragflächen oder dergleichen. Derartige Einbauten sind einzeln oder als Gruppe mit aerodynamisch geformten Verkleidungselementen ummantelt. Die Stützelemente sind ebenfalls von einem aerodynamisch geformten Verkleidungselement umgeben oder weisen ein aerodynamisch geformtes Querschnittsprofil auf. Durch die aerodynamische Form der Verkleidung sollen Druckverluste und Vibrationen im Nebenstromkanal reduziert und damit verbundene negative Auswirkungen auf die Triebwerksleistung bzw. mechanisch und akustisch nachteilige Wirkungen verringert werden. Zwar sind die Druckverluste aufgrund der aerodynamischen Verkleidung geringer als ohne Verkleidung, jedoch erzeugen die Verkleidungselemente infolge ihres relativ großen Volumens immer noch hohe Druckverluste. Zudem interagieren die großvolumigen Verkleidungselemente strömungstechnisch mit den stromauf angeordneten Nachleitradschaufeln, die dadurch ein ungleichmäßiges, auf den Fan zurückwirkendes Umfangsdruckfeld erzeugen. Damit verbunden sind negative Auswirkungen auf die Fanstabilität und den Fanwirkungsgrad und folglich auch auf die Triebwerksleistung, den Kraftstoffverbrauch und den vom Triebwerk erzeugten Lärmpegel. Ferner ist aus der EP 0 942 150 A2 ein Nebenstromkanal gemäß dem Oberbegriff des Anspruchs 1 bekannt.

Der Erfindung liegt die Aufgabe zugrunde, den Nebenstromkanal eines Turbofantriebwerks so auszubilden, dass die Rückwirkungen der Verkleidungselemente auf die Nachleitradschaufeln und auf den Fan minimiert werden und die Triebwerksleistung bei verringertem Treibstoffverbrauch erhöht wird.

Erfindungsgemäß wird die Aufgabe mit einem gemäß den Merkmalen des Patentanspruchs 1 ausgebildeten Nebenstromkanal gelöst.

Vorteilhafte Weiterbildungen der Erfindung sind Gegenstand der Unteransprüche.

Der Grundgedanke der Erfindung besteht darin, dass mindestens eine der Nachleitradschaufeln des dem Fan im Nebenstromkanal nachgeordneten Nachleitschaufelrades und ein stromab einer Nachleitradschaufel folgendes Verkleidungselement als kombiniertes - einstückiges und aerodynamisch geformtes - Schaufel- und Verkleidungselement ausgebildet sind, das sowohl die Funktion einer Nachleitradschaufel als auch die Funktion eines Verkleidungselements für im Nebenstromkanal angeordnete Einbauten oder einer aerodynamisch geformten Stützstrebe übernimmt. Die einstückige Ausbildung eines Verkleidungselements mit einer stromauf angeordneten Schaufel, das heißt die Integration von in einer bestimmten Außenkontur geformten Verkleidungselementen in das Nachleitschaufelrad führt zur Verringerung von Druckverlusten und zu einem reduzierten Treibstoffverbrauch sowie zu einer Reduzierung der Druckwirkung auf den Fan und mithin zu einer größeren Betriebsstabilität des Fans und einem höheren Fanwirkungsgrad sowie einer Verringerung der Schallemission.

Gemäß einem weiteren Merkmal der Erfindung ist das kombinierte Schaufel- und Verkleidungselement zum Entdrallen und verlustarmen Abströmen des Luftstroms in einer vorgegebenen strömungsgünstigen druck- und saugseitigen Außenkontur entsprechend eines von der jeweiligen Sehnenlänge A der betreffenden Nachleitradschaufel und der Gesamtlänge L des kombinierten Schaufel- und Verkleidungselements bestimmten Verlaufs des Skelettlinienwinkels $\alpha$ des Profils ausgebildet.

Die Gesamtlänge des kombinierten Schaufel- und Verkleidungselements zwischen dessen Vorderkante und dessen Hinterkante ist in einen der Sehnenlänge A der betreffenden Nachleitradschaufel entsprechenden ersten Abschnitt, einen zweiten Abschnitt, dessen Länge mit der des ersten Abschnitts im Wesentlichen übereinstimmt, einen dritten Abschnitt, dessen Länge etwa 0,7(L-2A) und einen vierten Abschnitt, dessen Länge etwa 0,3(L-2A) beträgt, aufgeteilt, wobei der dimensionslose Skelettlinienwinkel $\alpha$ bis zum Ende des ersten Abschnitts auf einen Wert von 80%$\pm$10% ansteigt, im zweiten Abschnitt zunächst weiter ansteigt und am Ende einen Maximalwert von 105%$\pm$5% aufweist, im dritten Abschnitt stetig bis auf 100% abfällt und im vierten Abschnitt konstant bei 100% bleibt.

In Ausgestaltung der Erfindung hat die Länge des zweiten Abschnitts eine Schwankungsbreite von $\pm$5% und die Länge des dritten und des vierten Abschnitts eine Schwankungsbreite von $\pm$10%.

Ein Ausführungsbeispiel der Erfindung wird anhand der Zeichnung näher erläutert. Es zeigen:

Fig. 1    eine schematische Profilschnittansicht eines Teils des im Nebenstromkanal angeordneten Nachleitschaufelrades und eines stromab einer Nachleitradschaufel angeordneten Verkleidungselements oder Stützelements

Fig. 2    eine Darstellung nach Fig. 1 mit einem einstückig mit einer Nachleitradschaufel ausgebildeten Verkleidungselement;

Fig. 3    den Verlauf des Skelettlinienwinkels entlang der Sehne S einer Nachleitradschaufel mit integriertem Verkleidungselement; und

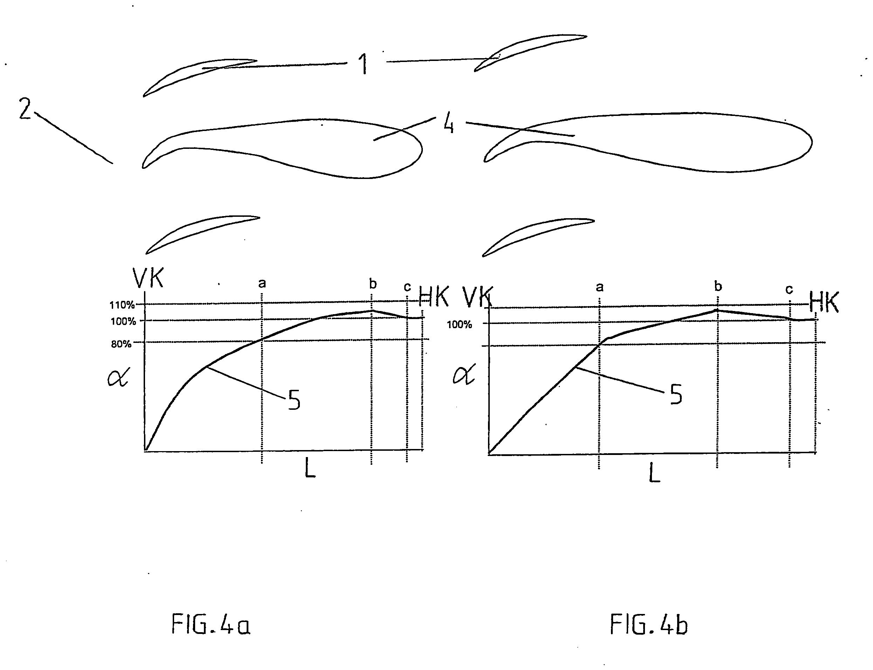

Fig. 4a/b   zwei Profilschnittansichten eines Teils eines Nachleitschaufelrades, bei dem die Nachleitradschaufeln mit integriertem Verkleidungselement, und die jeweilige graphische Darstellung des unterschiedlichen Skelettlinienverlaufs.

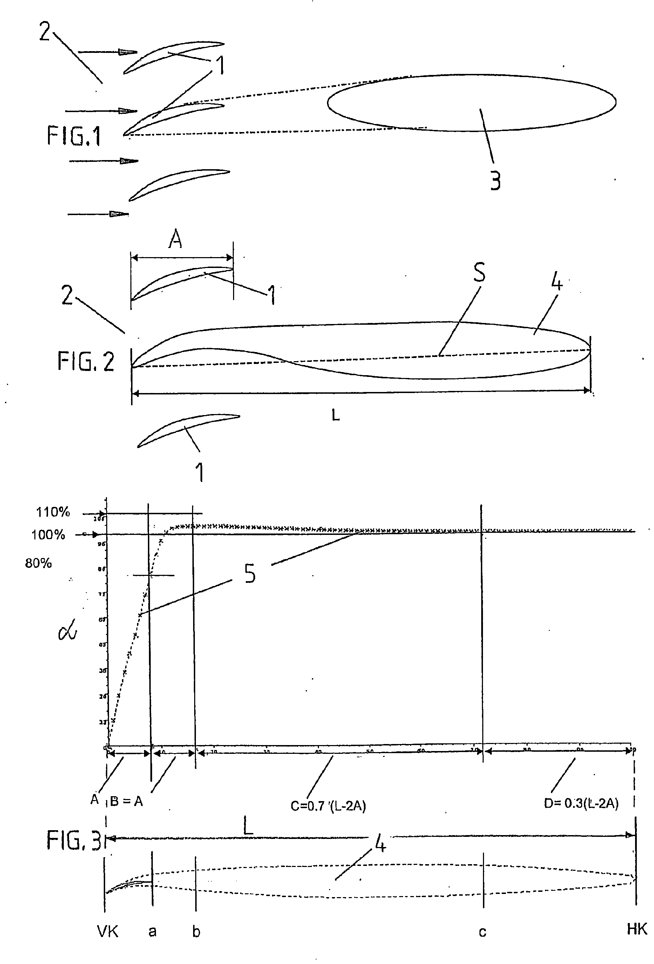

Gemäß Fig. 1 ist ein im Nebenstromkanal stromab einer der Nachleitradschaufeln 1 des Nachleitschaufelrades 2 ein Verkleidungselement 3 angeordnet, dessen vorgesehene Verknüpfung mit der Nachleitradschaufel 1 durch eine punktierte Linie angedeutet ist. Gemäß Fig. 2 sind die Nachleitradschaufel 1 und das Verkleidungselement 3 als integrales, einstückiges, kombiniertes Schaufel- und Verkleidungselement 4 ausgebildet. Das heißt, eine Nachleitradschaufel 1 und ein Verkleidungselement 3 bilden ein einstückiges Bauteil (4), bei dem das Verkleidungselement neben seiner Funktion zur aerodynamisch günstigen Verkleidung von im Nebenstromkanal angeordneten Einbauten gleichzeitig die Funktion einer Nachleitradschaufel des Nachleitschaufelrades 2 übernimmt. Das Querschnittsprofil des kombinierten Schaufel- und Verkleidungselements 4 ist so ausgebildet, dass der Drall aus der Fanabströmung entfernt wird und die Luft parallel zur Triebwerksachse über das kombinierte Schaufel- und Verkleidungselement 4 strömungsgünstig und verlustarm abströmt. Um dieser Funktion gerecht zu werden, muss die Profilgeometrie des kombinierten Schaufel- und Verkleidungselements 4, die als Überlagerung einer Dickenverteilung und einer Skelettlinienverteilung beschreibbar ist, optimal gestaltet werden. Die Dickenverteilung ist allgemein als Verlauf der Dicke über der Sehnenlänge L des jeweiligen Profils definiert, während die Skelettlinienverteilung als Verlauf der Skelettlinienwinkelverteilung entlang der jeweiligen Profilsehne S beschrieben wird. Die Skelettlinie, die durch einen an jedem Punkt übereinstimmenden Abstand (halbe Profildicke) zu den beiden Außenkonturen (Druck- und Saugseite) des Profils gekennzeichnet ist, das heißt mittig durch den Profilquerschnitt verläuft, ist in Form des dimensionslosen Skelettlinienwinkels $\alpha$ entlang der dimensionslosen Länge L der Profilsehne S definiert. Der Skelettlinienwinkel $\alpha(l)$ ergibt sich aus

$$\alpha(l) = (\alpha_i(l) - BIA)/(BIA-BOA) \ [\%]$$

worin $\alpha_i$ der lokale Winkel der Skelettlinie und BIA bzw. BOA der relativ zur Triebwerksachse gemessene Eintrittswinkel bzw. Austrittswinkel sind.

Figur 2 zeigt den Verlauf 5 des Skelettlinienwinkels über der parallel zur Triebwerksachse gemessenen Gesamtlänge L des erfindungsgemäß kombinierten Schaufel- und Verkleidungselements 4. Die axiale Länge L des kombinierten Schaufel- und Verkleidungselements 4 zwischen dessen Vorderkante VK und dessen Hinterkante HK ist in vier Abschnitte A, B, C und D eingeteilt. Die Länge des ersten Abschnitts A zwischen den Punkten VK und a entspricht der Länge einer saugseitig benachbarten Nachleitradschaufel 1 (siehe Fig. 1). In diesem ersten Abschnitt A steigt der dimensionslose Skelettlinienwinkel $\alpha$ an und erreicht am Ende des Abschnitts A im Punkt a einen Wert von 80%. In dem anschließenden zweiten Abschnitt B, dessen Länge mit der Länge des ersten Abschnitts A übereinstimmt, steigt der Skelettlinienwinkel nur anfangs an und hat am Ende des zweiten Abschnitts B im Punkt b seinen maximalen Wert von 105%. Im folgenden dritten Abschnitt C, der eine Länge von C = 0.7(L - 2A) hat, fällt der Skelettlinienwinkel allmählich ab und hat am Ende des dritten Abschnitts C im Punkt c einen Wert von 100%. Im vierten Abschnitt D mit einer Länge von D = 0.3(L - 2A) bleibt der Skelettlinienwinkel bis zur Hinterkante HK konstant bei 100%.

Die Figuren 3a und 3b zeigen noch zwei andere Ausführungsvarianten eines in das Nachleitschaufelrad 2 integrierten kombinierten Schaufel- und Verkleidungselements 4 mit einem in Abhängigkeit von der jeweiligen Sehnenlänge A der betreffenden Nachleitradschaufel 1 und der Gesamtlänge L des kombinierten Schaufel- und Verkleidungselements 4 abhängigen Längenverhältnis der Abschnitte A, B, C und D und einem dementsprechend anderen Verlauf des Skelettlinienwinkels. Die Dickenverteilung über die Gesamtlänge L entlang der zuvor beschriebenen Skelettlinie ist beliebig.

Aufgrund der kombinierten - einstückigen - Ausbildung einer Nachleitradschaufel 1 und des stromab folgenden Verkleidungselements 3 sowie der auf dem vorgegebenen Verlauf 5 des Skelettlinienwinkels basierenden spezifischen Außenkontur des in das Nachleitschaufelrad 2 integrierten kombinierten Schaufel- und Verkleidungselements 4 können die durch die üblichen Verkleidungselemente 3 verursachten Druckverluste und die stromauf auf den Fan gerichtete Druckwirkung deutlich reduziert werden und der Treibstoffverbrauch und die Schallemission des Triebwerks verringert werden.

**Bezugszeichenliste**

| | |
|---|---|
| 1 | Nachleitradschaufel |
| 2 | Nachleitschaufelrad |
| 3 | Verkleidungselement, Stützelement |
| 4 | kombiniertes Schaufel- und Verkleidungselement |
| 5 | Verlauf des dimensionslosen Skelettlinienwinkels |
| S | Profilsehne |
| L | axiale Länge, Gesamtlänge, Sehnenlänge von 4 |
| $\alpha$ | Skelettlinienwinkel |
| VK | Vorderkante von 4 |
| HK | Hinterkante von 4, Endpunkt des Abschnitts D |
| A | erster Abschnitt der Gesamtlänge L |
| A | Sehnenlänge einer Nachleitradschaufel |
| B | zweiter Abschnitt von L |
| C | dritter Abschnitt von L |
| D | vierter Abschnitt von L |
| a | Endpunkt des Abschnitts A |
| b | Endpunkt des Abschnitts B |
| c | Endpunkt des Abschnitts C |

**Patentansprüche**

1. Nebenstromkanal eines Turbofantriebwerk mit in diesem angeordneten Nachleitradschaufeln (1) eines Nachleitschaufelrades (2) zum Entdrallen des vom Fan erzeugten Luftstroms und stromab im Nebenstromkanal von diesem angeordneten Verkleidungselementen (3) für im Nebenstromkanal vorgesehene Einbauten wie Leitungen, Halterungen, Stützen oder Antriebsübertragungsmittel, **dadurch gekennzeichnet, dass** mindestens eine Nachleitradschaufel (1) und ein diesem stromab folgendes Verkleidungselement (3) als kombiniertes Schaufel- und Verkleidungselement (4) einstückig ausgebildet sind,

   - wobei das kombinierte Schaufel- und Verkleidungselement (4) zum Entdrallen und verlustarmen Abströmen des Luftstroms in einer vorgegebenen druck- und saugseitigen Außenkontur entsprechend eines von der jeweiligen Sehnenlänge (A) der betreffenden Nachleitradschaufel und der Gesamtlänge (L) des kombinierten Schaufel- und Verkleidungselements (4) bestimmten Verlaufs (5) des Skelettlinienwinkels $\alpha$ des Profils ausgebildet ist, und
   - wobei die Gesamtlänge (L) des kombinierten Schaufel- und Verkleidungselements (4) zwischen dessen Vorderkante (VK) und dessen Hinterkante (HK) in einen der Sehnenlänge (A) der betreffenden Nachleitradschaufel (1) entsprechenden ersten Abschnitt (A), einen zweiten Abschnitt (B), dessen Länge mit der des ersten Abschnitts (A) im Wesentlichen übereinstimmt, einen dritten Abschnitt (C), dessen Länge etwa 0,7(L-2A) und einen vierten Abschnitt (D), dessen Länge etwa 0,3(L-2A) beträgt, aufgeteilt ist, wobei der dimensionslose Skelettlinienwinkel $\alpha$ bis zum Ende des ersten Abschnitts (A) auf einen Wert von 80%$\pm$10% ansteigt, im zweiten Abschnitt (B) zunächst weiter ansteigt und am Ende einen Maximalwert von 105%$\pm$5% aufweist, im dritten Abschnitt (C) stetig bis auf 100% abfällt und im vierten Abschnitt konstant bei 100% bleibt.

2. Nebenstromkanal nach Anspruch 1, **gekennzeichnet durch** eine Schwankungsbreite der Länge des zweiten Abschnitts (B) von $\pm$5% sowie des dritten und des vierten Abschnitts (C, D) von $\pm$10%.

**Claims**

1. Bypass flow channel of a turbofan engine having follow-up guide wheel vanes (1), arranged therein, of a follow-up guide-vane wheel (2) for the removal of swirl from the air flow generated by the fan, and having cladding elements (3), arranged downstream thereof in the bypass flow channel, for fixtures provided in the bypass flow channel, such as lines, holders, supports or drive transmission means, **characterized in that** at least one follow-up guide wheel vane (1) and one cladding element (3) which follows the latter downstream are formed in one piece as a combined vane and cladding element (4),

- wherein the combined vane and cladding element (4), for the removal of swirl from and low-loss flowing-off of the air flow, is formed with a predefined pressure- and suction-side outer contour corresponding to a curve (5) of the mean line angle α of the profile, which curve is determined by the respective chord length (A) of the relevant follow-up guide wheel vane and by the overall length (L) of the combined vane and cladding element (4), and

- wherein the overall length (L) of the combined vane and cladding element (4) between its leading edge (VK) and its trailing edge (HK) is divided into a first portion (A), which corresponds to the chord length (A) of the relevant follow-up guide wheel vane (1), a second portion (B), the length of which substantially corresponds to the length of the first portion (A), a third portion (C), the length of which is approximately 0.7(L-2A), and a fourth portion (D), the length of which is approximately 0.3(L-2A), wherein the dimensionless mean line angle a, to the end of the first portion (A), increases to a value of 80%±10%, in the second portion (B), initially further increases and has a maximum value of 105%±5% at the end, in the third portion (C), steadily decreases to 100%, and in the fourth portion, remains constant at 100%.

2. Bypass flow channel according to Claim 1, **characterized by** a variation width of the length of the second portion (B) of ±5%, and of the third and of the fourth portion (C, D) of ±10%.

**Revendications**

1. Canal de flux secondaire d'un groupe propulseur à réacteur à double flux comprenant des aubes directrices arrière (1) d'une roue à aubes directrices arrière (2) disposées dans celui-ci servant à dégyrer le flux d'air généré par le réacteur et, disposés en aval de celui-ci dans le canal de flux secondaire, des éléments d'habillage (3) pour des objets encastrés présents dans le canal de flux secondaire, tels que des conduites, des éléments de maintien, des supports ou des moyens de transmission d'entraînement, **caractérisé en ce qu'**au moins une aube directrice arrière (1) et un élément d'habillage (3) qui suit celle-ci en aval sont réalisés d'un seul tenant sous la forme d'un élément d'aube et d'habillage (4) combiné,

- l'élément d'aube et d'habillage (4) combiné étant configuré pour dégyrer et évacuer avec faibles pertes le flux d'air dans un contour extérieur prédéfini côté pression et aspiration conformément à un tracé (5) de l'angle de la ligne moyenne α du profil déterminé par la longueur de corde (A) respective de l'aube directrice arrière concernée et la longueur totale (L) de l'élément d'aube et d'habillage (4) combiné, et

- la longueur totale (L) de l'élément d'aube et d'habillage (4) combiné entre son bord avant (VK) et son bord arrière (HK) étant divisée en une première portion (A), qui correspond à la longueur de corde (A) de l'aube directrice arrière (1) concernée, une deuxième portion (B) dont la longueur coïncide sensiblement avec celle de la première portion (A), une troisième portion (C), dont la longueur est approximativement égale à 0,7(L-2A), et une quatrième portion (D), dont la longueur est approximativement égale à 0,3(L-2A), l'angle de la ligne moyenne α sans dimension augmentant jusqu'à la fin de la première portion (A) à une valeur de 80 % ±10 %, poursuivant tout d'abord sa croissance dans la deuxième portion (B) et possédant à la fin une valeur maximale de 105 % ±5 %, chutant continuellement jusqu'à 100 % dans la troisième portion (C) et restant constant à 100 % dans la quatrième portion.

2. Canal de flux secondaire selon la revendication 1, **caractérisé par** une largeur de fluctuation de la longueur de la deuxième portion (B) de ±5 % et de la longueur des troisième et quatrième portions (C, D) de ±10 %.

FIG.1

FIG. 2

FIG. 3

A

B = A

C = 0.7 (L-2A)

D = 0.3(L-2A)

L

VK   a   b              c        HK

110%
100%
80%

FIG.4a

FIG.4b

EP 2 378 072 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0942150 A2